# EUROPEAN PATENT APPLICATION

(11) **EP 4 137 604 A1**
(43) Date of publication of application: **22.02.2023**
(21) Application number: 21192479.0
(22) Date of filing: 20.08.2021
(51) Int. Cl.: C23C 8/36, H01M 4/134, H01M 4/1395, H01M 4/36, H01M 4/38, H01M 4/62, H01M 10/052

(54) **METHOD FOR APPLYING A PROTECTIVE LAYER TO A METAL OR METAL ALLOY SURFACE, AND ARTICLE COMPRISING SUCH PROTECTIVE LAYER**

(71) Applicant: VITO NV, 2400 Mol (BE)
(72) Inventor: RANGASAMY,Vijay Shankar, 2400 Mol (BE); VANHULSEL, Annick, 2400 Mol (BE); VANGENEUGDEN, Dirk, 2400 Mol (BE)
(74) Representative: AWA Benelux

(57) **Abstract**

The present invention discloses a method for applying a protective layer on at least part of an exposed surface of a substrate, the method comprising activating a nitrogen comprising gas by means of an atmospheric pressure plasma discharge to obtain an activated gas, and contacting the exposed surface with the activated gas, wherein the protective layer is formed on at least part of the exposed surface; wherein the surface comprises a metallic element or an alloy thereof, the metallic element is an alkali metal or an alkaline earth metal, contacting the exposed surface comprises contacting the exposed surface with the activated gas in an afterglow resulting from the plasma discharge, and the protective layer comprises at least 60 mol% of a nitride of the metallic element. The invention is further related to an article, comprising substrate and a protective layer covering at least part of the substrate sharing an interface comprising a metallic element of an alloy thereof, wherein the protective layer comprises at least 60 mol% of a nitride of the metallic element and comprises a plurality of pillars projecting from the interface, wherein the pillars comprise pyramid-shaped tips.

## Description

### Technical field

The present invention relates to a method for applying a protective layer to a surface of a substrate, the surface comprising a metallic element or an alloy thereof, in particular wherein the metallic element is an alkali metal or an alkaline earth metal. The present invention is further related to an article comprising such a substrate and a protective layer arranged on or covering at least part of the substrate. The invention is further related to an electrode comprising the article, in particular an anode, and to a battery (cell) comprising the electrode.

### Background art

Recently, there has been a fast growing interest in high energy density batteries and battery cells comprising alkali metal anodes and alkaline earth metal anodes. In particular, lithium (Li) but also sodium (Na) as alkali metal and magnesium (Mg) as alkaline earth metal have gained interest as electrode material for anodes, such as for Li-ion and lithium-sulphur (Li-S) batteries and battery cells. The interest in lithium is related to the fact that lithium has the lowest reduction potential of any element, allowing lithium-based batteries to have a very high cell potential. Lithium is the third lightest element and has one of the smallest ionic radii of any single charged ion. Further, by using lithium in the anode, the presence of non-electroactive materials in the electrolyte of a battery or battery cell can be reduced, even minimized. These factors allow lithium-based batteries to have high gravimetric and volumetric capacity and power density in comparison to state of the art batteries, for example, batteries comprising intercalation-based anodes, such as carbon anodes or graphite anodes.

Alkali metal anodes, such as lithium metal anodes, and alkaline earth metal anodes, such as magnesium metal anodes, develop surface films when used in non-aqueous electrochemical cells (electrochemical cells, i.e. battery cells, comprising a non-aqueous electrolyte) because of the reaction of the metal with the electrolyte and with materials that move from the cathode to the electrolyte. This surface film is known in the technical field of batteries as the solid electrolyte interphase (SEI) layer.

The SEI-layer is typically conductive to metal ions composing the anode, while mitigating the reactions of the metal with the electrolyte and its components. However, the SEI-layer can also reduce the discharge voltage and the capacity of the cell, and a SEI-layer with reduced effectiveness or efficiency results often in corrosion of the metallic anode.

In the case of Li-ion batteries, the SEI-layer comprises, and substantially consists of, reduction products of the carbonate-based electrolyte.

In the case of Li-S batteries, the materials moving from the cathode to the electrolyte mostly comprise electrochemical reduction products originating from the sulphur cathode in the form of polysulphides. The polysulphides are highly reactive, and render the SEI-layer in Li-S batteries and battery cells less effective, up to even ineffective, and thus unstable, which often results in corrosion of the lithium. The reaction of the polysulphides can lead to the so-called polysulphide shuttling and consumption of the electrolyte. This leads in most cases to a decrease of the Coulombic efficiency of the Li-S battery.

Further, during charging and discharging, in particular repeated charging and discharging, of a battery cell comprising an alkali metal or alkaline earth metal based anode, non-uniform dissolution and deposition of the respective metal on the electrode surface, in particular the anode, leads to the formation of needle-like deposits, i.e. (needle-like) dendrites. When a batter separator is provided between the anode and the cathode of the battery cell, these needle-like deposits can penetrate the battery separator material, thereby increasing the risk of short circuiting of the battery cell, reducing the safety of the battery cell.

It is known in the state of the art that the above-mentioned problem of unstable SEI-layers, especially in Li-S batteries, can be reduced significantly by the presence of alkali metal nitrate, such as lithium nitrate (LiNO₃) in the electrolyte of the battery cell.

An alternative solution is the provision of a protective layer on the surface of the electrode. Known suitable materials for use as a protective layer include inorganic materials, such as Li₃PO₄, carbon-based materials and Al₂O₃, and organic materials, in particular polymers, such as polyethylene oxide (PEO) and ionomers (polymers having ionic properties), for example sulfonated tetrafluoroethylene based fluoropolymer-copolymers, for example Nafion^{™} (CAS 31175-20-9). Although those materials can suppress lithium dendrite growth to some extent, they show several drawbacks, such as a complex preparation process, a low mechanical strength and/or a low Li-ion conductivity. Further, when organic materials are used, a higher operational temperature is required as well in order to provide for sufficient Li-ion conductivity. For example, PEO and Nafion^{™} require an operational temperature of about 60°C.

It is known that alkali metal nitride or alkaline earth metal nitride, such as lithium nitride (Li₃N), sodium nitride (Na₃N) and magnesium nitride (Mg₃N₂) as solid-state lithium ionic conductor can provide a high ionic conductivity (6*10⁻³ S/cm at room temperature) and a mechanical strength that is comparable to that of ceramic materials.

'An ex-situ nitridation route to synthesize Li3N-modified Li anodes for lithium secondary batteries', Y.J. Zhang, W. Wang et al, J. Power Sources 277 (2015) 304-311, discloses the formation of a Li₃N layer on a lithium substrate by exposing the lithium substrate to a nitrogen (N₂) gas flow of at least 100 sccm during 2 hours at room temperature. A drawback of the method is that the Li₃N layer is porous, hence electrolyte can pass through and lithium dendrites can be formed. Further drawbacks are that the method is time-consuming and is difficult to control. Insufficient process control can result in a polycrystalline Li₃N layer showing non-uniform Li ion transport, which results in very high currents at specific areas, leading to the growth of dendrites.

WO2013/055573 discloses a lithium metal substrate comprising a ceramic protective layer on an exposed surface of the substrate. The protective layer is made of lithium nitride and is highly conductive to lithium ions and protects the lithium metal surface from reaction with components in the electrolyte. The lithium nitride layer is obtained by exposing the lithium metal substrate to a plasma comprising ions of a gas, such as nitrogen.

'Flower-shaped lithium nitride as a protective layer via facile plasma activation for stable lithium metal anodes', Ke Chen, Rajesh Pathak et al., Energy Storage Materials 18 (2019) 389-396, discloses a method to provide a lithium nitride (Li₃N) layer on a lithium metal surface by contacting the lithium metal substrate surface with a nitrogen gas which is activated by means of a low pressure plasma discharge for a duration of minutes. The obtained Li₃N protective layer was found to be flower-shaped, and the density of the flower-shape layer increasing with increasing exposure time to nitrogen plasma. Mainly α-phase Li₃N crystals are observed, which are composed of hexagonal Li₂N layers connected by Li ions. This structure provides open tunnels in a N-Li-N structure to ensure Li ion conductivity. Typical thicknesses of the Li₃N layer are in the range of up to 100 µm (4 minutes treatment time). The Li₃N layer has a high Young's modulus of 48 GPa, and is capable of mechanically blocking Li dendrites.

After having been subjected to cycling (charging/discharging or plating/stripping), the flower shaped Li₃N morphology transforms into a hemispherical shape, thereby forming an interconnected interfacial protective layer. A drawback thereof is that Li ion transport is limited because of the very high homogeneity of the Li metal surface coverage, which limits the capacity of a battery. Further drawbacks are that pits and defects present on the lithium metal surface act as nuclei for uneven lithium deposition and dendrite formation, , which limits the maximum life time of the anode.

### Summary of the invention

The present invention aims to overcome one or more of the above drawbacks. It is an aim of the invention to provide an improved method for passivating a surface comprising a metallic element or an alloy of the metallic element, in which the protective layer is more stable and/or provides improved electrode or battery performance. It is an aim to provide such methods, which, amongst other advantages, are less complex, have a shorter treatment time, and/or provide better process control.

The invention further aims to provide an article, comprising a substrate having a surface comprising a metallic element or an alloy of the metallic element and a protective layer covering at least part of the surface, in which the protective layer is more stable and/or provides improved electrode or battery performance. It is an aim to provide such an article in which the protective layer, amongst other advantages, has a particular structure or morphology compared to the protective layers of the state of the art and/or has improved properties, in particular for use as an electrode.

According to a first aspect of the invention, there is therefore provided a method for applying a protective layer on a surface of a substrate as set out in the appended claims. A method as described herein provides a substrate comprising an exposed surface which comprises a metallic element and/or an alloy of the metallic element. The metallic element is an alkali metal or an alkaline earth metal. The method comprises the steps of (i) activating a gas by means of an atmospheric pressure plasma discharge to obtain an activated gas, wherein the gas comprises nitrogen (N₂), and (ii) contacting the exposed surface with the activated gas, wherein the protective layer is formed on at least part of the exposed surface.

The protective layer advantageously comprises at least 60 mol% of a nitride of the metallic element, preferably at least 70 mol%, more preferably at least 80 mol%, and most preferably at least 90 mol% of the nitride of the metallic element. The mol% can be determined by XPS.

According to the present invention, the exposed surface is contacted with the activated gas in an afterglow resulting from the atmospheric pressure plasma discharge. An afterglow refers to an activated gas that egresses from the atmospheric pressure plasma discharge, i.e. egressing from a plasma discharge chamber. Reactive species are created in the activated gas by the atmospheric pressure plasma discharge. These reactive species have a limited lifetime, and are typically still present in the afterglow, possibly in a lesser concentration. Due to the absence of direct exposure to the plasma discharge, an afterglow plasma treatment is considered a 'milder' treatment compared to direct exposure to the atmospheric pressure plasma discharge.

The inventors have surprisingly discovered that by contacting the surface of the substrate with the afterglow of the atmospheric pressure plasma discharge, hence without exposing the surface directly to the plasma discharge (i.e. the surface is arranged in the afterglow and hence remote from the plasma discharge), it is possible to obtain a nitride of the metallic element which is highly crystalline and has a particular morphology as will be described further below. It has been surprisingly observed that such protective layer, when used in an electrode for a battery (cell), provides a more stable interface between the metal and the electrolyte and an optimal electrical field with a low activation barrier for metal ion diffusion.

The gas that is activated by means of an atmospheric pressure plasma discharge can comprise a carrier gas. Alternatively or in addition, the gas that is activated by means of an atmospheric pressure plasma discharge can comprise a precursor, in particular one or more of a precursor gas, a vapour, an aerosol, or combinations thereof, which is introduced in an atmospheric pressure plasma discharge or in an afterglow resulting from the atmospheric pressure plasma discharge.

Advantageously, the gas comprises nitrogen in an amount of at least 90 vol.%, such as at least 95 vol.%, preferably at least 98 vol.%, more preferably at least 99 vol.%, most preferably at least 99.5 vol.%, in particular at least 99.95 vol.%, in particular at least 99.95 vol.%.

Advantageously, a concentration of an oxidizing gas, such as O₂, in the gas is equal to or lower than 0.5 vol.%, such as equal to or lower than 0.25 vol.%, equal to or lower than 0.1 vol.%, equal to or lower than 0.075 vol.%, preferably equal to or lower than 0.05 vol.%, equal to or lower than 0.025 vol.%, equal to or lower than 0.01 vol.%, equal to or lower than 0.0075 vol.%, more preferably equal to or lower than 0.005 vol.%.

The inventors have discovered that, even by using N₂ gas of technical quality with only a purity of about 90 vol.% in methods disclosed herein a protective layer can still be obtained which mainly consists of the nitride of the metallic element and which is substantially free of impurities such as oxides, hydroxides or carbonates of the metallic element. With 'substantially free of impurities' it is meant that the concentration of these impurities in the protective layer is below the detection limit of analysis techniques. Hence, methods as described herein are surprisingly robust against pollution by impurities and allow utilizing cheaper base materials.

Advantageously, the alkali metal is lithium (Li) or sodium (Na) and the corresponding alkali metal nitride is lithium nitride (Li₃N) or sodium nitride (Na₃N), respectively. Advantageously, an alloy of the alkali metal comprises at least 5 wt.% lithium or sodium, preferably at least 7.5 wt.%, more preferably at least 10 wt.% lithium or sodium based on the total weight of the alkali metal alloy.

Advantageously, the alkaline earth metal is magnesium (Mg) and the corresponding alkaline earth metal nitride is magnesium nitride (Mg₃N₂). Advantageously, an alloy of the alkaline earth metal comprises at least 5 wt.% magnesium, preferably at least 7.5 wt.%, more preferably at least 10 wt.% magnesium based on the total weight of the alkaline earth metal alloy.

Advantageously, the exposed surface is contacted with the activated gas at a temperature equal to or lower than 700°C, preferably equal to or lower than 180°C, more preferably equal to or lower than 120°C, most preferably equal to or lower than 100°C, in particular equal to or lower than 75°C.

Advantageously, contacting the exposed surface with the activated gas in the afterglow comprises alternating time periods of contacting the exposed surface with a higher concentration of reactive species and time periods of contacting the exposed surface with a lower concentration of reactive species. These time periods are advantageously low-frequency time periods, e.g. having a duration of at least 0.5 s, advantageously at least 1 s, and can be obtained by locally treating the surface with the plasma afterglow repetitively, in multiple passes, or by moving the exposed surface repetitively towards and away from the afterglow, or vice versa.

According to a second aspect of the invention, there is provided an article as set out in the appended claims. An article as described herein comprises a substrate and a protective layer covering at least part of the substrate. The protective layer and the substrate share an interface. The interface comprises a metallic element and/or an alloy of the metallic element. The metallic element is an alkali metal or an alkaline earth metal. Advantageously, the protective layer is conductive to ions of the corresponding metallic element. Advantageously, the protective layer comprises a plurality of pillars projecting from the interface. Advantageously, the pillars are made of stacked layers of crystals of a nitride of the metallic element. Advantageously, the pillars are spaced apart along the substrate surface/interface. Advantageously, the stacked layers of crystals have substantially a polyhedron shape or structure.

Advantageously, the plurality of pillars each have a cross section in a plane perpendicular to a direction of projection of the pillar, such as cross sections substantially parallel to a plane of the interface, the cross section having a polygonal shape. The polygonal shape can be a fern-shape, a kite-shape, a butterfly-shape or, in particular, a star-shape. Advantageously, the plurality of pillars each comprise a tip end forming a vertex or an edge of the polyhedron shape or structure.

Preferably, the metallic element is lithium and the stacked layers of Li₃N crystals comprise substantially hexagonal bipyramid structures.

Advantageously, the pillars have a height between 5 nm and 500 µm, such as between 10 nm and 100 µm, preferably between 50 nm and 50 µm, for example between 250 nm and 25 µm, most preferably between 500 nm and 15 µm, in particular between 1 µm and 15 µm, such as between 5 µm and 15 µm. The height refers to a free height, e.g. a height protruding from the interface.

According to a third aspect of the invention, there is provided an article comprising a substrate and a protective layer covering at least part of the substrate. The protective layer and the substrate share an interface. The interface comprises a metallic element and/or an alloy of the metallic element. The metallic element is an alkali metal or an alkaline earth metal. Advantageously, the protective layer comprises a nitride of the metallic element. Advantageously, the protective layer is made substantially of α-phase of the nitride of the metallic element and is substantially free from β-phase of the nitride of the metallic element. Preferably, the protective layer is made of at least 90% (metals basis) of α-phase of the nitride of the metallic element, such as at least 95%.

Advantageously, the α-phase of the nitride is maintained upon repeated plating/stripping cycles of the article, in particular at least for 250 cycles at a current density of 1 mA/cm², such as at least for 300 cycles, at least for 400 cycles, preferably at least for 500 cycles, more preferably at least for 600 cycles, most preferably at least for 700 cycles, such as at least for 750 cycles.

According to a fourth aspect of the invention, there is provided an article combining the features and advantages of the second aspect and of the third aspect as described above.

Advantageously, the protective layer comprises at least 60 mol% of the nitride of the metallic element, preferably at least 70 mol%, at least 80 mol%, or at least 90 mol% of a nitride of the metallic element. The mol% can be determined by XPS.

Advantageously, the articles of the second, third and fourth aspect of the invention are obtained by means of methods of the first aspect of the invention.

According to a fifth aspect of the invention, there is provided an electrode comprising the article of the second, third or fourth aspect of the invention. The electrode can be an anode.

According to a further aspect of the invention, there is provided a battery cell comprising the electrode according to the fifth aspect, in particular as an anode.

Advantages of plasma-based (deposition) methods compared to non-plasma-based methods for applying the protective layer are that the parameters of the deposition process can be controlled more accurately, which allows a better control of the composition of the obtained protective layer and/or a reduction of the formation of any unwanted by-products, and/or that the process can be carried out at a low temperature. A further advantage is that plasma-based methods are more efficient in utilizing resources, such as energy.

The inventors have further surprisingly discovered that by means of the methods of the present invention a protective layer is obtained with a particular morphology and/or a particular crystallinity, which are very stable and show unrivalled performance characteristics when used in electrode and battery applications, in particular upon repeated plating and stripping cycles or charging and discharging cycles.

The protective layer according to aspects of the present disclosure was found to have one or more of the following advantages:
- improvement of the stability of the protective layer at repeated plating and stripping cycles or charging and discharging cycles,
- improvement of the charging-discharging efficiency (Coulombic efficiency), in particular in the long term use,
- improvement of the mechanical stability of the protective layer,
- improvement of the flexibility of the protective layer, and
- improvement of the interface between the substrate and the electrolyte.

### Brief description of the figures

Aspects of the invention will now be described in more detail with reference to the appended drawings, wherein same reference numerals illustrate same features and wherein:
Figure 1 represents schematically a plasma discharge equipment that can be used in the present invention.
Figure 2 represents schematically an article of the present invention.
Figures 3A and 3B represent SEM images of the surface of an article obtained by methods of the present invention (Figure 3A) and by prior art methods (Figure 3B).
Figure 4 represents schematically the configuration of a typical coin cell.
Figures 5A, 5B, 5C and 5D represent SEM images of the surface of an article obtained by methods of the present invention.
Figure 6 represents schematically the configuration of a symmetric coin cell.
Figures 7A and 7B represent the EIS results of a symmetric coin cell comprising a lithium metal anode without protective layer (Figure 7A) and with a protective layer (Figure 7B).
Figure 8A represents the stability of a lithium metal anode with and without a protective layer upon repeated plating and stripping of the lithium. Figure 8B represents a close-up of the stability of the lithium metal anode with protective layer.
Figure 9A represents a SEM image of the surface of the lithium metal anode with protective layer after repeated plating and stripping of the lithium. Figures 9B and 9C represent a SEM image of close-ups of the protective layer. Figure 9D represents a geometrical outline of the morphological features in the protective layer.
Figure 10 represents a 3D model of the protective layer on the lithium metal after repeated plating and stripping of the lithium.
Figures 11A and 11B represent SEM images of the surface of a lithium metal anode without (Figure 11A) and with (Figure 11B) protective layer upon 175 hours and 54 days, respectively, of repeated plating and stripping of the lithium.
Figure 12 represents schematically the hexagonal bipyramid structure of stacked layers of Li₃N.

### Description of embodiments

According to an aspect of the present invention, a method is provided for applying a protective layer on an exposed surface of a substrate. The surface comprises or consists of a metallic element and/or an alloy of the metallic element. The surface can comprise two or more metallic elements and/or two or more alloys of a metallic element. The metallic element is an alkali metal or an alkaline earth metal. The obtained protective layer comprises or consists of a nitride of the metallic element.

The alkali metal can be any element from Group 1 (la) of the periodic system of elements (PSE), i.e. lithium (Li), sodium (Na), potassium (K), rubidium (Rb), cesium (Cs) or francium (Fr). Preferably, the alkali metal is lithium (Li), and the corresponding alkali metal nitride is lithium nitride (Li₃N). The alkali metal can however also be sodium (Na), and then the corresponding alkali metal nitride is sodium nitride (Na₃N).

The surface can comprise an alloy of the alkali metal. Preferably, the alkali metal alloy comprises lithium (Li), for example at least 5 wt.% lithium, preferably at least 10 wt.% lithium based on the total weight of the alkali metal alloy, and/or sodium (Na), for example at least 5 wt.% sodium, such as at least 10 wt.%, at least 15 wt.%, at least 20 wt.%, at least 25 wt.%, preferably at least 30 wt.% sodium based on the total weight of the alkali metal alloy. The alkali metal alloy can further comprise one or more other elements, such as elements from Group 2 of the PSE, for example magnesium (Mg), and/or elements from Group 3 of the PSE, for example aluminium (Al), and/or elements from Group 4 of the PSE, for example silicium (Si).

The alkaline earth metal can be any element from group 2 (IIa) of the periodic system of elements (PSE), in particular beryllium (Be), magnesium (Mg), calcium (Ca), strontium (Sr) and barium (Ba). Preferably, the alkaline earth metal is magnesium (Mg), and the corresponding alkaline earth metal nitride is magnesium nitride (Mg₂N₃).

The surface can comprise an alloy of the alkaline earth metal. Preferably, the alkaline earth metal alloy comprises magnesium (Mg), for example at least 5 wt.% magnesium, such as at least 10 wt.%, at least 15 wt.%, at least 17 wt.%, at least 20 wt.%, at least 25 wt.%, at least 30 wt.%, preferably at least 34 wt.%, such as at least 35 wt.% magnesium based on the total weight of the alkaline earth metal alloy. The alkaline earth metal alloy can further comprise one or more other elements, such as elements from Group 1 of the PSE, for example lithium (Li) or sodium (Na), and/or elements from Group 3 of the PSE, for example aluminium (Al), and/or elements from Group 4 of the PSE, for example silicium (Si).

According to the present invention, the protective layer is applied on a surface of the substrate that is exposed to an afterglow of an atmospheric pressure plasma discharge. A gas is activated by means of an atmospheric pressure plasma discharge. The activated gas is made to egress from the plasma discharge chamber to form a so-called afterglow in which reactive species are present. The surface of the substrate is brought in contact with the afterglow. The reactive species react with the metallic element on the exposed surface and thereby produce the protective layer.

An atmospheric pressure plasma discharge can be obtained by means of a direct current (DC) excitation (DC plasma discharge) or an alternating current (AC) excitation (AC plasma discharge), by inductively coupled plasma excitation, by excitation by means of radio waves or microwaves (radio frequency or microwave plasma discharge), or by other excitation means known in the field. Without being limited thereto, an atmospheric pressure plasma discharge by means of DC excitation can be an electric arc discharge (arc plasma discharge). An atmospheric pressure plasma discharge by means of AC excitation can be, without being limited thereto, a corona discharge, a dielectric barrier discharge (DBD), a piezoelectric direct discharge, or a plasma jet.

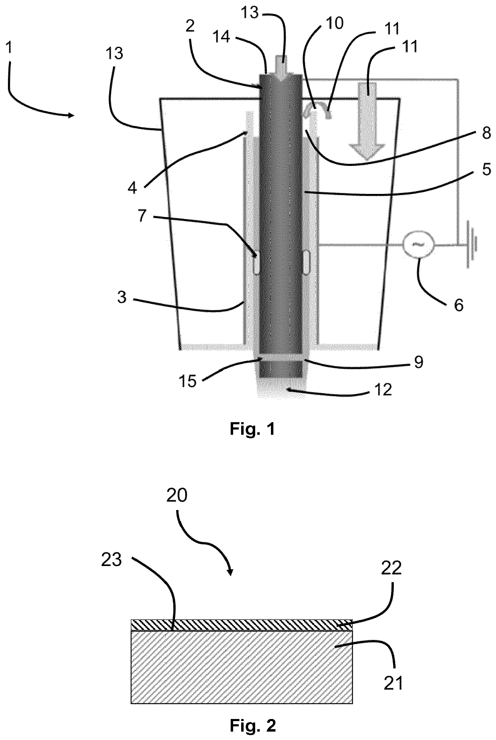

Referring to Fig. 1, an atmospheric pressure plasma jet apparatus (or plasma torch) 1 can be utilized for carrying out an exemplary embodiment of the method of the invention. The apparatus 1 allows to obtain an atmospheric pressure plasma discharge by a dielectric barrier discharge (DBD). The apparatus 1 advantageously comprises a first electrode 2 and a second electrode 3. The second electrode 3 can be arranged coaxial with the first electrode 2. By way of example, the first electrode 2 is arranged centrally and the second electrode 3 can be arranged to surround the first electrode 2 and being coaxial with the first electrode 2. An electrical insulator 4 is coaxially disposed between the first, central electrode 2 and the second, outer electrode 3. A discharge lumen 5 in which a plasma discharge occurs is provided between the electrical insulator 4 and the first electrode 2. In this case the second electrode 3 acts as a high voltage electrode, and the first electrode 2 can be grounded. Alternatively, the discharge lumen 5 is provided between the electrical insulator 4 and the second electrode, and the first electrode 2 can be the high voltage electrode. The high voltage (HV) electrode refers to the electrode connected to a radio frequency power supply 6 as known in the art. It will be appreciated that the first and second electrodes can alternatively have a planar configuration, or any other suitable configuration, such as elliptical, with the electrical insulator interposed between them and spaced apart from one of the electrodes to define the discharge lumen.

The electrical insulator 4 may be a dielectric medium, such as Al₂O₃. Advantageously, a spacing between an outer surface of the first electrode 2 (or of the second electrode 3 as the case may be) and an inner surface of the electrical insulator 4 defining the discharge lumen 5 is between 0.1 mm and 10 mm, such as between 1 and 5 mm, preferably around 1.5 mm. The distance can be controlled by ceramic spacers 7. The discharge lumen 5 extends between a distal end 8 and a proximal end 9, forming an outlet.

A supply opening disposed at the distal end 8 of the discharge lumen 5 allows for supplying a carrier gas 11 to the discharge lumen 5. The carrier gas is advantageously an inert gas, such as nitrogen, helium or argon, or a combination of two or more thereof. Preferably, the carrier gas comprises nitrogen. More preferably, the carrier gas essentially consists of nitrogen. When the power supply 6 is operated, a plasma discharge is made to occur in the discharge lumen 5, which excites the carrier gas 11 in the discharge lumen. The plasma-excited carrier gas leaves the discharge lumen 5 at the proximal end 9. The afterglow zone 12 is formed in a region adjacent to and/or downstream of the proximal end 9. The substrate is introduced in the afterglow zone 12.

A precursor 13, in particular in gaseous, vapour or aerosol form, can be applied through a supply opening 14, either directly into the plasma discharge chamber (discharge lumen 5), or into the afterglow zone 12. By way of example, the central, first electrode 2 is hollow having an internal lumen. The precursor 13 is introduced through the internal lumen of the grounded electrode 2 and egresses in the afterglow zone 12, where it can be activated by the plasma-excited carrier gas. Subsequently, the activated precursor reacts with the exposed surface of a substrate to be treated. In present methods, a precursor is advantageously not introduced in the plasma discharge or afterglow.

A slit opening 15 can optionally be provided between the proximal end 9 and the plasma afterglow zone 12. The slit opening 15 allows to control the supplied amount of precursor 13. The slit opening 15 can have a width of between 0.1 mm and 5 mm, such as between 0.2 mm and 2.5 mm, between 0.25 mm and 1 mm, preferably for the method of the invention around 0.5 mm.

The substrate having a surface comprising a metallic element can be arranged in the afterglow zone 12 by means of a substrate holder, such as a plate or a grid or a tray, whereon or wherein the substrate is placed. The substrate holder can be moved relative to the plasma jet apparatus 1 to apply the plasma treatment to the entire surface. Preferably, the exposed surface is oriented towards the proximal end 9 of the discharge lumen 5 to ensure an optimal contact with the activated gas in the afterglow zone 12.

The carrier gas advantageously comprises, or consists essentially of, nitrogen (N₂). According to an embodiment, the precursor gas, if used, comprises, or consists essentially of, nitrogen. The carrier gas and/or precursor gas can comprise one or more further inert gases, for example helium (He) or argon (Ar), in addition to nitrogen.

Preferably, the carrier gas and/or precursor gas comprises N₂ in an amount of at least 90 vol.%, for example at least 92 vol.%, preferably at least 95 vol.%, such as at least 97.5 vol.%, more preferably at least 98 vol.%, most preferably at least 99 vol.%, such as at least 99.5 vol.%, at least 99.75 vol.%, at least 99.9 vol.%, or at least 99.95 vol.%. The inventors have observed that, even when use is made of N₂ gas of technical quality with a purity of about 90 vol. %, a protective layer can be obtained which essentially consists of a nitride of the metallic element, in which impurities such as the corresponding metal oxide, metal hydroxide, metal carbonate or others are absent or present at such a level that cannot be detected with available analytical methods.

Advantageously, the protective layer obtained by methods of the present disclosure comprises the nitride of the metallic element in an amount of at least 60 mol%, at least 70 mol%, at least 75 mol%, at least 80 mol%, at least 85 mol%, at least 90 mol%, or at least 95 mol% of the nitride of the metallic element. Mol% is expressed with respect to the composition of the protective layer, as determined by XPS.

Advantageously, the concentration of an oxidizing gas, in particular O₂, in the carrier gas and/or precursor gas is equal to or lower than 5 vol.%, such as equal to or lower than 1 vol.%, equal to or lower than 0.75 vol.%, preferably equal to or lower than 0.5 vol.%, for example equal to or lower than 0.25 vol.%, equal to or lower than 0.1 vol.%, equal to or lower than 0.075 vol.%, more preferably equal to or lower than 0.05 vol.%, such as equal to or lower than 0.025 vol.%, equal to or lower than 0.01 vol.%, equal to or lower than 0.0075 vol.%, most preferably equal to or lower than 0.005 vol.%.

The power supply 6 is preferably arranged to provide an AC or DC voltage, between 0.5 kV and 50 kV, such as between 1 kV and 10 kV. The voltage may be applied to either one, or both of the first and second electrodes by the power source as a continuous wave, i.e. the plasma discharge may be a continuous wave discharge. Alternatively, the voltage may be applied to either one, or both of the first and second electrodes by the power supply as a pulsed wave, i.e. the plasma discharge may be a pulsed plasma discharge.

The frequency of the voltage applied by the power supply may be from kHz to GHz, for example 18 kHz or 13.56 MHz.

According to an aspect of the present invention, the exposed surface comprising the metallic element and/or an alloy thereof is contacted subsequent to activating the gas by the atmospheric pressure plasma discharge in a so-called indirect plasma treatment, remote plasma treatment, or afterglow plasma treatment. Thereby, the surface to be treated is kept remote from the discharge lumen 5. The inventors have surprisingly discovered that by contacting the surface of the substrate with the afterglow of the atmospheric pressure plasma discharge, without exposing the surface directly to the plasma discharge, it is possible to obtain a nitride of the metallic element which is highly crystalline and has a particular morphology as will be described further below. In particular, the protective layer can comprise a plurality of pillars of the nitride of the metallic element and/or can substantially be monocrystalline. With monocrystalline it is meant that the nitride is present in crystals which comprise substantially a single type of crystal lattice. In the present invention, the single type of crystal lattice is in particular substantially α-phase type of crystal lattice. It has been surprisingly observed that such protective layer, when used in an electrode for a battery (cell), provides a more stable interface between the metal and the electrolyte and an optimal electrical field with a low activation barrier for metal ion diffusion.

In order to minimize the risk of melting of the metallic element and/or the alloy thereof in the course of the plasma afterglow treatment, the temperature of the exposed metal and/or metal alloy surface in step (ii) is advantageously maintained below the melting temperature of the metallic element and/or the alloy of the metallic element. The skilled person will be able to select the appropriate temperature taking into account the nature of the metal or metal alloy. Preferably, the temperature of the exposed surface in step (ii), i.e. during plasma afterglow treatment, is equal to or lower than 700°C, preferably equal to or lower than 500°C, more preferably equal to or lower than 400°C, most preferably equal to or lower than 250°C, in particular equal to or lower than 200°C, more in particular equal to or lower than 180°C, preferably equal to or lower than 120°C, more preferably equal to or lower than 100°C, in particular equal to or lower than 75°C.

It is possible to mount the plasma jet apparatus 1 on an XY table and move the apparatus 1 over the exposed surface to be treated. Alternatively, the substrate can be placed on an XY table and moved underneath the plasma jet apparatus 1. By doing so, larger surfaces can be treated, and/or a treatment in multiple passes can be performed.

Advantageously, step (ii) comprises contacting the surface of the substrate with the activated (afterglow) gas in multiple passes. This can be performed by moving the outlet (proximal end 9) of the discharge lumen and the surface of the substrate relative to one another in repeating passes. By so doing, it is obtained that a same spot on the surface of the substrate is alternatingly exposed to a higher concentration of the activated gas, e.g. when the spot is in closer proximity to the outlet of the discharge lumen, and to a lower concentration of the activated gas, e.g. when the spot is further away from the outlet of the discharge lumen. The number of passes can depend on a number of factors, such as the applied power, the distance between the surface and the outlet of the discharge lumen, and the metallic element, and is advantageously between 1 and 10, advantageously between 1 and 8, advantageously between 1 and 5.

Each unit portion of the exposed surface is advantageously contacted with the activated gas in the afterglow for a total treatment time of between 0.1 seconds and 5 minutes, between 1 second and 4 minutes, such as between 2 seconds and 4.5 minutes, between 5 seconds and 4 minutes, between 10 seconds and 3.5 minutes, between 15 seconds and 3 minutes, preferably between 20 seconds and 2.5 minutes, for example between 25 seconds and 2 minutes, more preferably between 30 seconds and 90 seconds, such as around 60 seconds. The total treatment time can refer to the time in a single pass or a multi-pass treatment during which a unit surface area is contacted by the activated gas.

The treatment time depends on, without being limited thereto, the thickness of the protective layer to be obtained, the composition of the gas, the gas flow, the configuration of the plasma discharge equipment (such as distance between electrodes, if electrodes are present), and the type of plasma discharge (AC or DC or other, pulsed wave or continuous wave, etc.), the plasma discharge power, or the temperature of the exposed surface comprising the metallic element or an alloy thereof.

A pre-treatment can be performed to the substrate, in particular to the surface that will be exposed to the activated gas. The pre-treatment can comprise one or more of a reductive pre-treatment and a cleaning. The pre-treatment can be performed by means of a plasma discharge, or by means of another method, such as a method using one or more liquids. It will however be appreciated that methods as described herein do not require a pre-treatment of the exposed surface prior to applying the protective layer.

A post-treatment can be performed to the a protective layer, in particular a thermal post-treatment, such as a drying step.

The plasma apparatus can be mounted in a closed environment (not shown), which is advantageously filled with an inert gas, such as nitrogen, helium or argon, or a mixture of two or more thereof. Preferably the closed environment is filled with N₂. The closed environment allows to reduce the presence of unwanted impurities in the afterglow zone.

According to a second aspect of the present invention, an article, comprising a substrate and a protective layer arranged on at least part of substrate is provided. The protective layer is advantageously obtained by methods as described herein. The protective layer and the substrate share an interface. The interface comprises a metallic element and/or an alloy of the metallic element. The metallic element is an alkali metal or an alkaline earth metal. The metallic element and the substrate are as defined above in relation to the method of the invention. The protective coating advantageously comprises a nitride of the metallic element.

Referring to Fig. 2, an article 20 according to aspects as described herein comprises a substrate 21 and a protective layer 22 arranged thereon. The bulk substrate 21 and the protective layer 22 share an interface 23. Hence, the protective layer is advantageously directly arranged on the substrate 21 at the interface 23, without any other interposed layer between them.

Advantageously, the protective layer is conductive to ions of the metallic element. For example, when the metallic element is lithium (Li), the protective layer advantageously is conductive to lithium ions.

Preferably, the protective layer is impermeable to electrons. Preferably, when the article is used as an electrode, preferably as an anode, in a battery or battery cell, the protective layer is passivated to reactions with the electrolyte. In other words, the protective layer advantageously minimizes reactions between the substrate and the electrolyte.

Advantageously, the protective layer comprises a plurality of pillars projecting from the interface. With projecting from the interface it is meant that the pillars are grown and thus present on the surface in a direction different from the plane of the interface. Advantageously, the pillars are spaced apart.

The pillars can be branched, e.g. comprising side-branches. Alternatively, the pillars can be substantially straight. The pillars can comprise pyramid-shaped tips at the top of the pillar and/or at side-branches of the pillar. Advantageously, the plurality of pillars each comprise a cross section in a plane perpendicular to a direction of projection (i.e., a direction of extension) of the pillar, or of the branch, which has a polygonal shape. The polygonal shape can be a fern-shape, a kite-shape, a butterfly-shape or, in particular, a star-shape.

Advantageously, the pillars can have a height between 10 nm and 100 µm, for example between 25 nm and 75 µm, preferably between 50 nm and 50 µm, such as between 75 nm and 45 µm, between 100 nm and 40 µm, between 150 nm and 35 µm, between 200 nm and 30 µm, more preferably between 250 nm and 25 µm, for example between 350 nm and 20 µm, most preferably between 500 nm and 15 µm, in particular between 1 µm and 15 µm or between 5 µm and 15 µm. The thickness can be measured by means of scanning electron microscopy (SEM) of the cross-section of the article. For example, a FEI NovaSEM 450 scanning electron microscope can be used. The cross-section can be made by slicing the article by means of a ceramic knife. The sliced samples can then be positioned on SEM sample holders placed in a transfer module (brand: Kammrath Weiss Gmbh) to avoid any contamination with moisture and oxygen from the atmosphere during transfer to the scanning electron microscope.

Advantageously, the pillars are made of a plurality of stacked layers of crystals of the nitride of the metallic element. Advantageously, the stacked layers all have a same or identical crystalline structure. Each of these stacked layers can have the shape of a polyhedron. A polyhedron shape refers a three-dimensional shape with flat polygonal faces, straight edges and sharp corners or vertices.

Preferably, adjacent layers of crystals within a pillar have substantially the same orientation. Without wishing to be bound by any theory, a first crystal of the nitride of the metallic element can function as a nucleus or seed for the growth of further crystals, thereby obtaining adjacent layers having substantially the same orientation. The orientation of a layer can be determined by the longest axis of the geometric figure. The layers of crystals further comprise a width and a length.

The distance between adjacent pillars can be between 100 nm and 5 µm, such as between 200 nm and 4 µm, between 250 nm and 3 µm, preferably between 500 nm and 2 µm, in particular 1 µm.

The inventors have surprisingly discovered that when the protective layer comprises a plurality of pillars, diffusion channels for ions of the metallic element are provided between adjacent pillars. Such ion diffusion channels can contribute to an increase of the ionic conductivity.

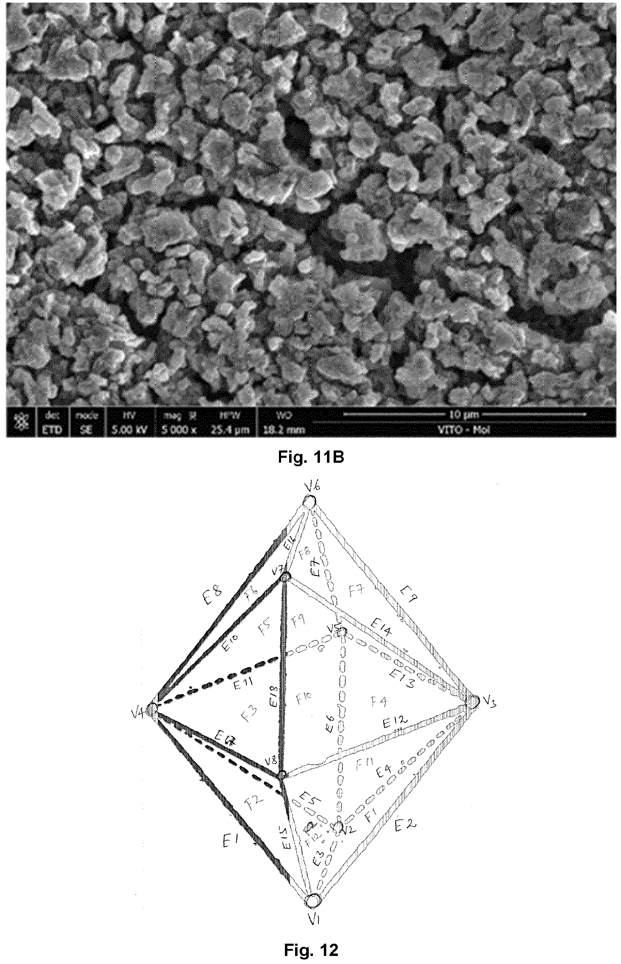

By way of example, in case the interface surface comprises Li or a Li alloy, it has been observed that at least part of the stacked layers in the pillars and/or the tops of the pillars were observed to have a hexagonal bipyramid morphology as shown in Figure 12, comprising 8 vertices V1-V8, 12 faces F1-F12 and 18 edges E1-E18. Geometrically, the hexagonal bipyramid consists of twelve triangular faces, arranged in six pairs.

Advantageously, the hexagonal bipyramid structure or morphology comprises an average angle between the edges at the basal vertices between 45° and 85°, preferably between 50° and 75°, such as between 50° and 60°, more preferably between 55° and 60°.

Advantageously, the hexagonal bipyramid morphology comprises an average angle at the vertices at the apex between 40° and 75°, preferably between 45° and 70°, such as between 50° and 65°, more preferably between 55° and 60°.

The longest dimension of a layer of Li₃N crystals can be between 0.5 µm and 5 µm, preferably between 1 µm and 4 µm, more preferably between 1.5 µm and 2.5 µm. The shortest dimension of a layer of Li₃N crystals can be between 0.5 µm and 5 µm, preferably between 1 µm and 4 µm, more preferably between 1.5 µm and 2.5 µm.

The hexagonal bipyramid structure of the Li₃N crystals can have an aspect ratio between 0.75 and 1.25, such as between 0.8 and 1.2, preferably between 0.9 and 1.1, for example 1, wherein the aspect ratio is the ratio of the width of a crystal to the height of the crystal. When the aspect ratio is between 0.9 and 1.1, the crystals can be considered to have a substantially symmetrical morphology or structure.

Advantageously, the protective layer is made substantially of α-phase of the nitride of the metallic element, in particular the concentration of α-phase of the nitride of the metallic element is at least 90%, such as at least 92.5%, at least 95%, at least 98%, or at least 99% on metals basis. Advantageously, the protective layer is substantially free from β-phase of the nitride of the metallic element. With 'substantially free' it is meant that the concentration of β-phase of the nitride of the metallic element is below the limit of detection of analysis methods, in particular X-ray diffraction (XRD).

By way of example, in case the interface surface comprises Li or a Li alloy, it has been observed that the protective layer mainly comprises crystalline α-Li₃N (a-phase Li₃N). Advantageously, the α-Li₃N crystalline phase is arranged in pillars which protrude from the Li or Li alloy surface (interface) and are distanced from each other (at least over part of their height) to provide Li ion diffusion channels between them. The protective layer was observed to be free of β-Li₃N (β-phase Li₃N), which means that it does not contain β-Li₃N in an amount that is detectable with X-ray diffraction. Advantageously, the α-phase Li₃N crystals have a hexagonal structure comprising edge-sharing layers of planar lithium hexagons centred by nitrogen in the ab plane. Each of these hexagons is connected by a lithium ion above and another lithium ion below, both lithium ions along the c plane. Further, each nitrogen atom is coordinated by a total of eight lithium atoms in hexagonal bipyramidal geometry.

Protective layers as described herein were found to be mechanically stable, even when subjecting them to changing electrical fields in the form of repeated plating/stripping cycles, and, when used in an electrode of a battery, in the form of repeated charging/discharging cycles. In particular, the plurality of pillars and/or the crystalline morphology are maintained upon repeated plating/stripping cycles of the article, in particular at least for 250 cycles at a current density of 1 mA/cm², such as at least for 300 cycles, at least for 400 cycles, preferably at least for 500 cycles, more preferably at least for 600 cycles, most preferably at least for 700 cycles, such as at least for 750 cycles.

Advantageously, when the article is used in an electrode in a battery, the α-phase of the nitride are maintained upon repeated charging/discharging cycles of the article, in particular at least for 250 cycles at a current density of 1 mA/cm², such as at least for 300 cycles, at least for 400 cycles, preferably at least for 500 cycles, more preferably at least for 600 cycles, most preferably at least for 700 cycles, such as at least for 750 cycles.

Without wishing to be bound by any theory, the protective layer of the invention comprises high conductivity pathways in which excellent metal ion transport can take place (high ionic conductivity). Such high conductivity pathways are advantageously provided by means of the pillar-morphology and/or the high concentration of α-crystals in the protective coating.

The protective layer also provides an improved resistance to the substrate to volume changes upon charging and discharging of the battery compared to prior art protective layers having a different crystallinity and/or morphology, leading to a reduced damage of the protective layer over time.

Advantageously, the protective layer comprises at least 60 mol %, for example at least 70 mol%, at least 75 mol%, at least 80 mol%, at least 90 mol% or at least 95 mol% of the nitride of the metallic element.

Advantageously, the protective layer comprises at most 40 mol% of an oxide of the metallic element, such as at most 20 mol%, at most 15 mol%, preferably at most 10 mol%, more preferably at most 5 mol%, most preferably at most 3 mol% of an oxide of the metallic element.

Advantageously, the protective layer as obtained as described herein has a Young's modulus equal to or lower than 45 GPa, indicating a certain degree of flexibility and providing resistance against cracking of the layer upon repeated stripping/plating of the article. As a result of the certain degree of flexibility, the passivated substrate, i.e. the substrate comprising a protective layer of the invention, is advantageously as malleable as the bare substrate.

The article of the invention is advantageously used as (part of) an electrode. The electrode is advantageously an anode. The electrode can be used in a battery or a battery cell. Preferably, the electrode is used in the battery cell as an anode. Particularly preferred is a lithium-ion, a solid state lithium-ion, a Li-S (lithium-sulphur) or a lithium-air battery or battery cell comprising a lithium anode with a protective layer as described herein.

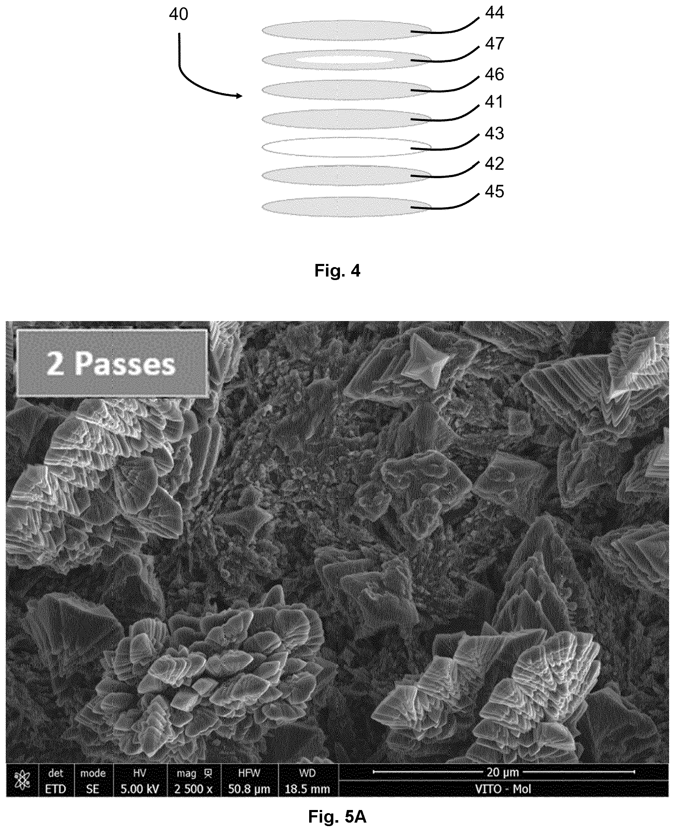

Fig. 4 represents an exemplary embodiment of a battery cell 40. The battery cell 40 has a coin-cell configuration known in the art as a CR2032 type configuration. The battery cell 40 comprises an anode 41 and a cathode 42. The anode 41 is an electrode according to the present invention. The battery cell 40 further comprises a liquid electrolyte (not shown). The battery cell advantageously comprises a battery separator membrane 43 between the anode 41 and the cathode 42. The cathode can for example be a sulphur-based cathode, such as for a Li-S battery cell. The battery cell 40 further comprises a coin cell lid 44, a coin cell base 45, a spacer 46 and a spring 47. The spacer 46 and the spring 47 provide good contact between the other components 41, 42, 43, 44, 45 of the battery cell 40.

The electrolyte may be a solid electrolyte. A solid electrolyte may be a solid polymer or a solid inorganic glass. For example, the solid electrolyte may be poly(ethylene oxide) (PEO) with lithium salts dispersed in the polymer matrix of the PEO.

Alternatively, the electrolyte may be a liquid electrolyte. The electrolyte may be an ionic liquid, optionally comprising an organic component, a salt-solvent mixture, preferably a super-saturated salt-solvent mixture. For example, a liquid electrolyte may be an ionic liquid with lithium salt dissolved therein, or a mixture of an ionic liquid and an organic liquid with a dissolved lithium salt. Examples of liquids that may be used include polyethylene glycol dimethyl ether (PEG DME) or an organic solvent such as dioxolane mixed with dimethyl ether. The liquid electrolyte may comprise a compound of tetraethylene glycol dimethyl ether (PEGDME) and lithium bis(trifluoromethanesulfonyl)imide (LiTFSI). A useful ionic liquid is methyl-butyl pyridinium trifluorosulfonyl imide (PYR14TFSI). In one example, the electrolyte has a 1:1 ratio by weight of PYR14TFSI and PEGDME, with 1 mol/kg LiTFSI. In another example, the electrolyte comprises 1M lithium bis(trifluoromethanesulfonyl)imide (LiTFSI) in dimethoxyethane (DME):1,3-dioxolane (DOL) with a weight ratio of 2:1.

Yet alternatively, the electrolyte may be a gel electrolyte. A gel electrolyte may be a polymer-gelled organic medium. For example, the gel electrolyte may be a mixture of poly(methyl methacrylate) (PMMA), a lithium salt and a small amount of liquid.

The battery separator membrane can be a porous separator membrane. Polymeric battery separator membranes known in the field may be used, such as a porous polypropylene (PP) membrane or a porous polyethylene (PE) membrane. For example, a polypropylene membrane having a thickness of 25 µm and a porosity of 50% may be used. PP and PE are preferred materials because of their chemically inert character. However they are not easily wetted, while it is preferred that the porous separator may absorb the liquid electrolyte. To this end the hydrophobic PP and PE may be treated with a surface treatment or a coating, such as a spray coating, a dip coating or a plasma coating - atmospheric pressure plasma or low pressure plasma. Alternatively, the battery separator membrane may be a ceramic material.

### Examples

### Example 1

A lithium metal substrate was treated with a method of the invention. The plasma jet apparatus of Fig. 1 was used, wherein the lithium metal substrate was mounted on a substrate holder and placed in the afterglow zone 12 of an atmospheric pressure dielectric barrier discharge. The substrate holder was moved by means of an XY translation table in a plane parallel to the outlet of the discharge lumen of the plasma jet apparatus so as to expose the entire surface to the afterglow zone. The plasma jet apparatus was mounted in a closed environment as described above. Nitrogen was added to the closed environment to limit the presence of unwanted impurities, in particular oxygen and water vapour. The gas used for the plasma discharge was N₂ as precursor and as carrier gas. The total nominal gas flow of N₂ carrier gas and precursor gas was 20 slm. The plasma power was 300 W and the frequency was 17 kHz. The duration of contacting the exposed surface with the activated N₂ gas was 1 minute (1 pass). The temperature of the exposed surface was around 80°C. The distance between the proximal end of the discharge lumen and the exposed lithium metal surface of the substrate was 3 mm. The closed environment comprised less than 50 ppm O₂.

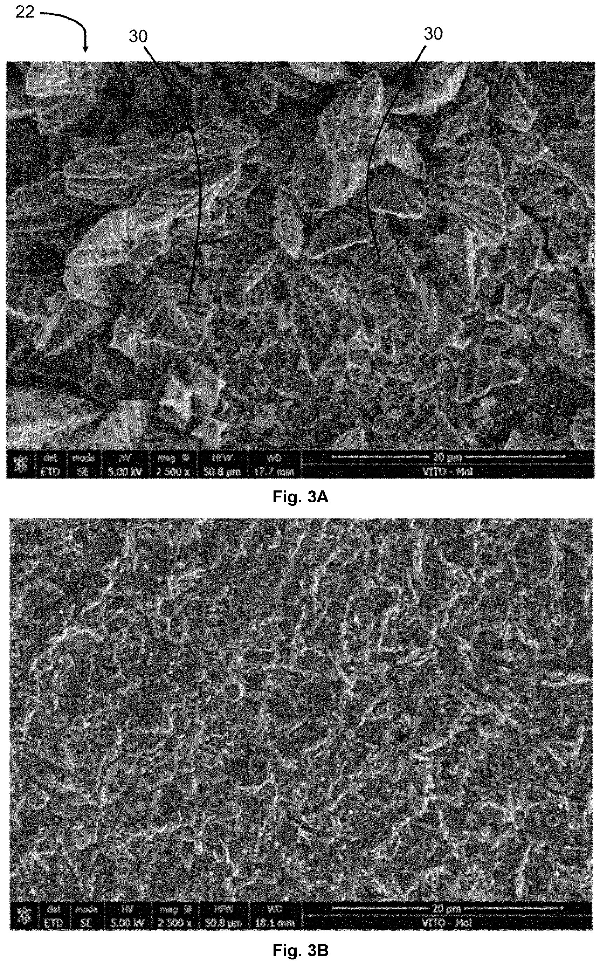

Fig. 3A shows a SEM-image of the obtained lithium nitride layer after three passes. With three passes it is meant that the exposed surface of the substrate was contacted three times with the activated gas, wherein each one of the three passes was performed as described above. The protective layer clearly shows a morphology or structure comprising a plurality of pillars 30 projecting from the substrate. The pillars have a pyramid-shaped tip. The lithium nitride crystals are stacked in a direction away from the lithium metal surface of the substrate. By comparison, such structure comprising pillars was not observed when the surface of a same substrate was exposed to a flow of nitrogen at room temperature for several hours without any plasma discharge being present, as shown in Fig. 3B.

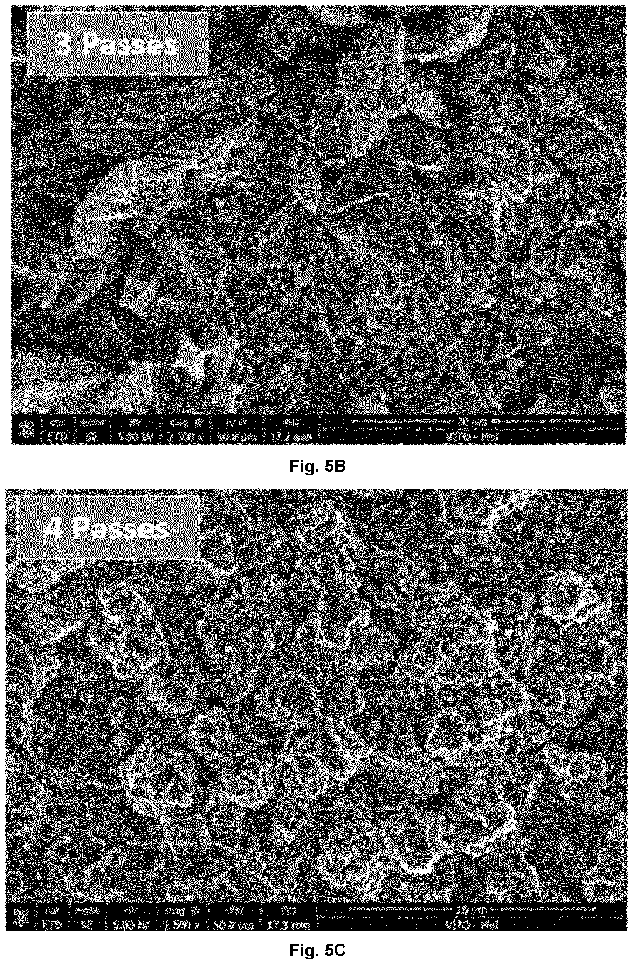

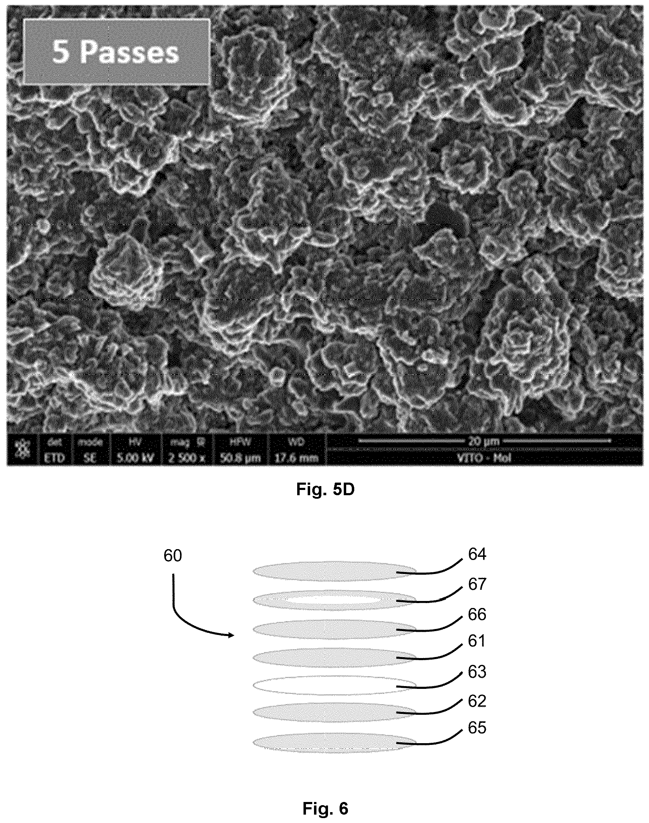

Fig. 5A, 5B, 5C and 5D show the morphology of the obtained lithium nitride layer after 2, 3, 4 and 5 passes, respectively, wherein each one of the passes was performed as described above. The morphology of the protective layer after 2 and 3 passes (1 minute and 1.5 minutes total treatment time of each portion of the exposed surface) shows that the lithium nitride layer comprises a plurality of pillars, whereas after 4 and 5 passes this is less clear. This can be explained by the fact that with each pass, lithium nitride crystals can be obtained not only on the top of the pillars, but also at the sides, resulting in pillars having a less "straight" or "linear" structure or form.

The inventors have discovered that for the optimal performance of the protective layer, a more "linear" or "straight" shape of the pillars is advantageously present. Hence, it can be beneficial to limit the number of passes or the total treatment time in order to obtain this particular and particularly beneficial morphology.

### Example 2

Li-ion battery cells were made to evaluate the charge/discharge characteristics and the cycle life characteristics of the anode comprising a protective layer. The battery cells were produced in a glovebox filled with argon and with an oxygen and moisture level below 1 ppm to reduce the risk for contamination during production.

Battery cells of the type represented by Fig. 4 were made, in which the anode was an electrode obtained through Example 1. A reference battery cell was made in which the anode was lithium metal without any protective layer. For both battery cells, the cathode was prepared in-house by coating a slurry containing appropriate amounts of lithium cobalt oxide (LCO), carbon and a binder on an aluminium foil. A polymeric separator was placed between the anode and the cathode. The battery cells were filled with 90 µL of an electrolytic solution comprising 1M lithium hexafluorophosphate (LiPF₆) in a mixture of ethylene carbonate and dimethyl carbonate (EC/DMC) with a weight ratio of 1:1. The battery cells were sealed with a pneumatic press.

### Example 3

Li-S battery cells were made to evaluate the charge/discharge characteristics and the cycle life characteristics of the anode comprising a protective layer. The battery cells were produced in a glovebox filled with argon and with an oxygen and moisture level below 1 ppm to reduce the risk for contamination during production.

Battery cells of the type represented by Fig. 4 were made, in which the anode was an electrode obtained through Example 1. A reference battery cell was made in which the anode was lithium metal without any protective layer. For both battery cells, the cathode was prepared in-house by coating a slurry containing appropriate amounts of sulphur, carbon and a binder on an aluminium foil. A polymeric separator was placed between the anode and the cathode. The battery cells were filled with 90 µL of an electrolytic solution comprising 1M lithium bis(trifluoromethanesulfonyl)imide (LiTFSI) in dimethoxyethane (DME)/1,3-dioxolane (DOL) with a weight ratio of 2:1 and without LiNO₃ additive. The battery cells were sealed with a pneumatic press.

### Example 4

Li-S symmetric battery cells, as represented in Fig. 6, were made to evaluate how the internal resistance of the anode with and without the protective layer evolves as a function of time. The battery cells were produced in a glovebox filled with argon and with an oxygen and moisture level below 1 ppm to reduce the risk for any contamination during production.

The Li-S symmetric battery cells 60 are similar to the battery cells 40 of Fig. 4, with the difference that both electrodes 61, 62 are identical. For the reference battery cell, the electrodes were lithium metal substrates without any protective layer. For the battery cells 60 according to the invention, the electrodes 61, 62 were obtained through Example 1. A polymeric separator 63 was placed between the electrodes 61 and 62. The battery cells 60 were filled with 90 µL of an electrolytic solution comprising 1M lithium bis(trifluoromethanesulfonyl)imide (LiTFSI) in dimethoxyethane (DME)/1,3-dioxolane (DOL) with a weight ratio of 2:1 and without LiNO₃ additive. Further, a coin cell lid 64 and a coin cell base 65 were provided, as well as a spacer 66 and a spring 67 to ensure good contact between the components of the cell 60.The battery cells 60 were sealed with a pneumatic press.

Electrochemical impedance spectroscopy (EIS) was performed on the reference symmetrical battery cell and symmetrical battery cell according to the invention. A 10 mV AC potential was applied to the cell during the frequency sweep. The frequency sweep was performed from 100 kHz to 0.01 Hz.

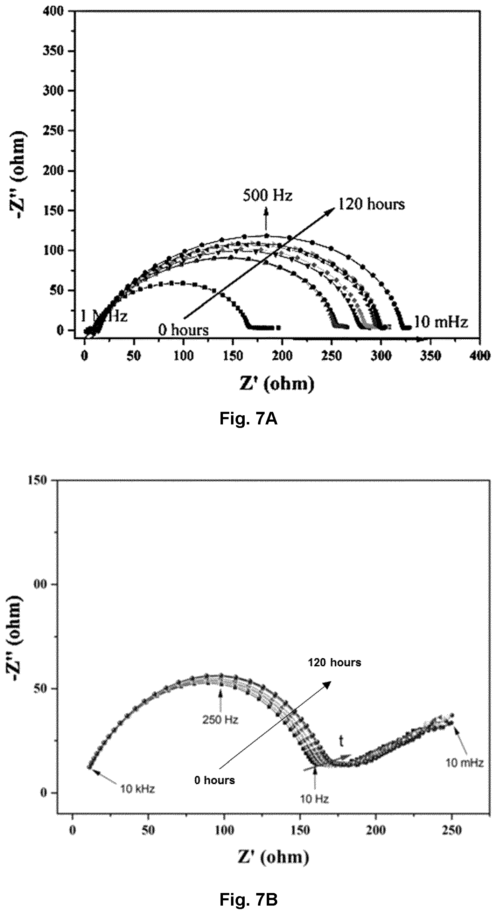

Fig. 7A and Fig. 7B show the Nyquist plot of the impedance data for the reference symmetrical battery cell and the symmetrical battery cell according to the invention, respectively. In the Nyquist plots the impedance data from each frequency point is plotted. The abscissa (x-axis) shows the real part of the impedance data and the ordinate (y-axis) shows the imaginary part of the impedance data. Figs. 7A and 7B show the results at the start of the experiment (time 0) up to 120 hours of testing, represented in 6 hour intervals (results at time 0, after 6h, 12h, 18h, 24h, and so on up to 120 h).

The impedance spectra of both the reference cell and the battery cell according to the invention consist of a semi-circle in the high-mid frequency region, which corresponds to the surface layer resistance. When comparing the evolution of the impedance spectra from time 0 hours up to 120 hours of testing, it is clear from Figs. 7A and 7B that the surface layer resistance formed in the symmetric cell of Fig. 6, made of electrodes comprising the protective layer of Example 1 remains stable over time indicating that the protective layer continues to provide an excellent protection.

### Example 5

The symmetric battery cell configuration 60 of example 4 was used to evaluate the lithium plating/stripping behaviour of the electrode by monitoring the evolution of the overpotential over time when a constant current of 1 mA/cm² is applied. An Ametek PARSTAT PMC-200 multichannel potentiostat was used to perform these measurements.

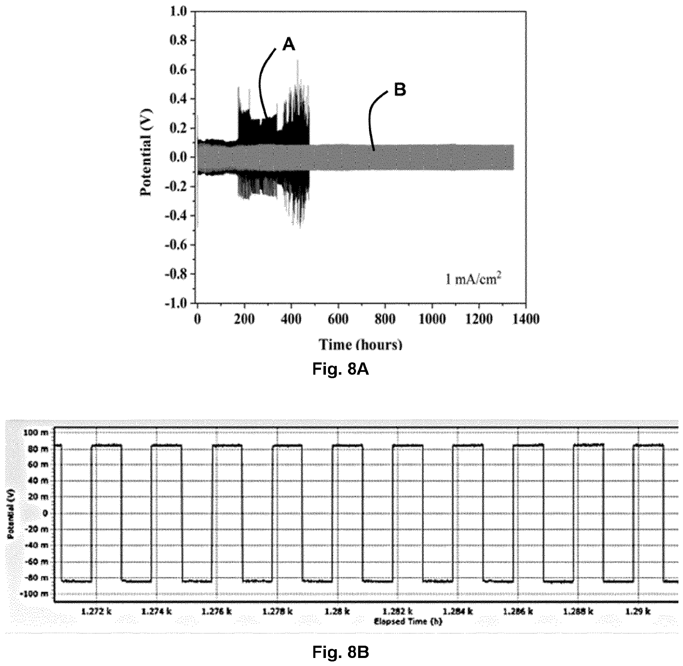

Fig. 8A shows the potential values measured for a duration of almost 500 hours for the reference battery cell (A, black) and for a duration of almost 1400 hours for the battery cell of the invention (B, grey). Up to a test duration of around 175 hours, the potential values represent the deterioration of the lithium metal. A higher absolute potential value, and thus a wider fluctuation of the potential values, indicates a larger deterioration. Hence it is clear that the electrode comprising a lithium metal substrate without protective layer shows earlier (from 175 hours test duration on) and more deterioration than the electrode of the invention. The electrode of the invention shows no detectable signs of deterioration up to at least almost 1300 hours test duration (longer was not tested).

Fig. 8B shows a close-up view of the plating/stripping overpotential of the electrode of the invention after a test duration around 1200 hours. The potential-time profile shows an excellent efficiency and stability of the protective layer and thus the passivated lithium metal.

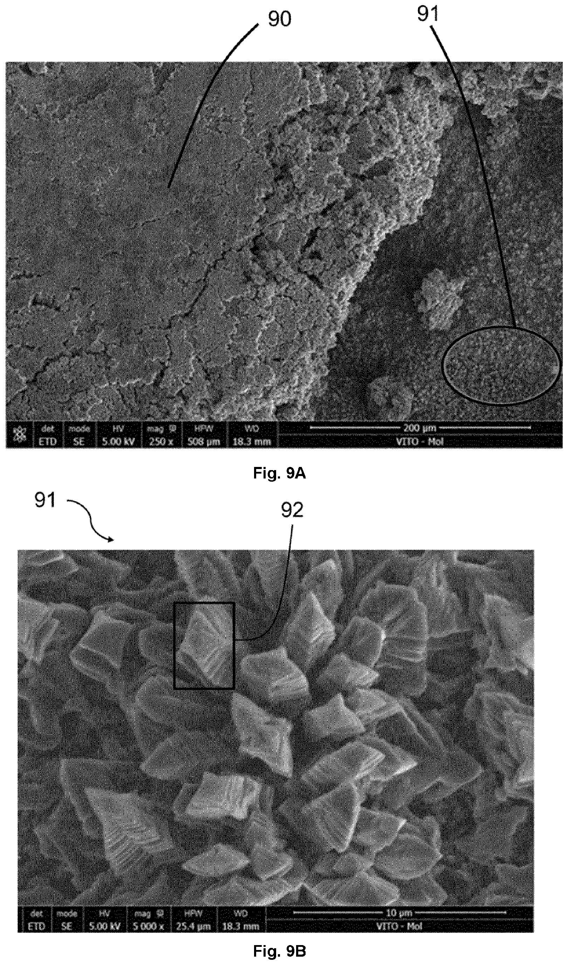

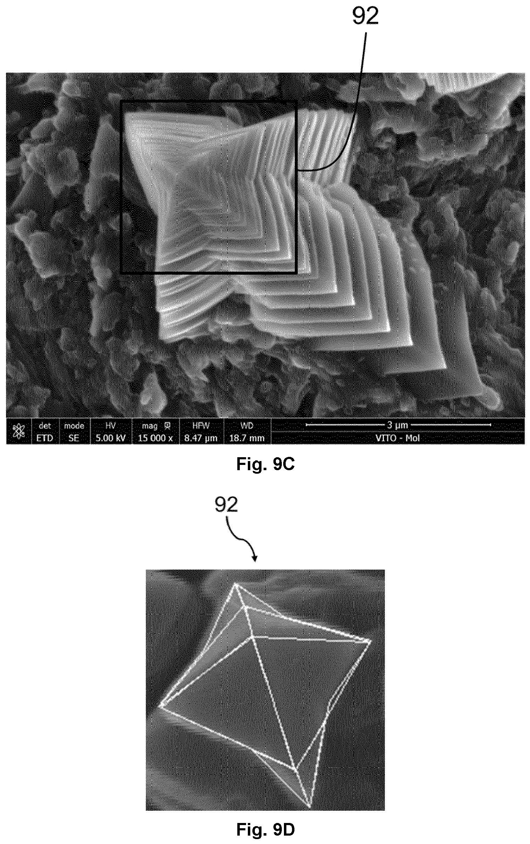

Fig. 9A shows the SEM image of one of the electrodes in the symmetrical battery cell according to the invention at the end of the plating/stripping testing (almost 1400 hours testing). A SEI layer 90 has formed on the electrode, and a portion of the protective layer 91 is visible. Fig. 9B and Fig. 9C show detailed views of the morphology of the protective layer 91. The morphology comprising a plurality of pillars is still clearly visible, as well as the pyramid-shaped top 92, indicating that the layer morphology has thus not significantly changed. Fig. 9D shows a geometrical outline of the morphological features of the pyramid-shaped top superimposed on an individual crystal layer.

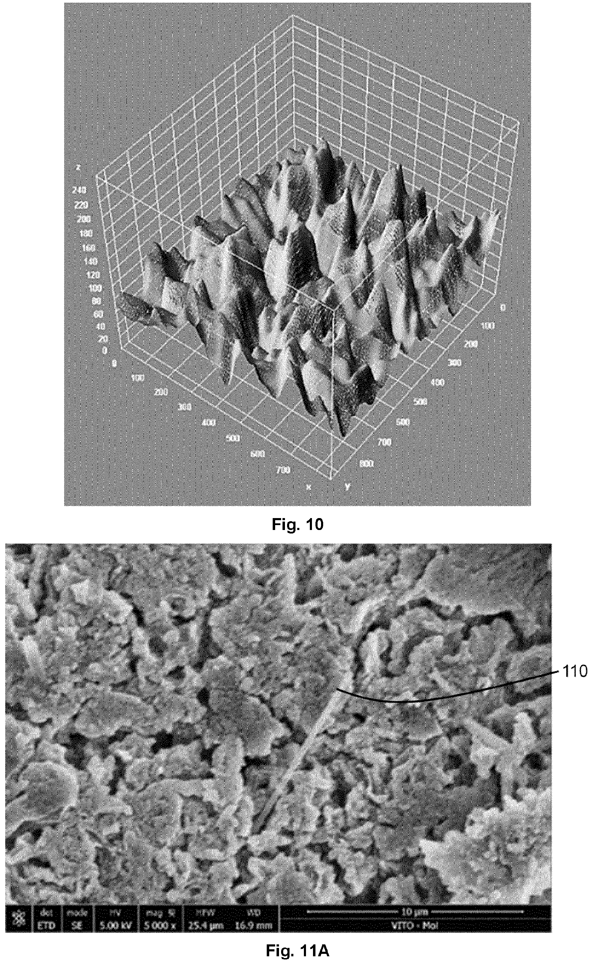

A 3D surface plot generated by ImageJ software from SEM images of a Li₃N layer of the invention clearly shows the protective layer comprising a plurality of pillars (Fig. 10), wherein the stacking of the layers of lithium nitride crystals extends substantially along a plane away from the lithium metal surface, the plane being substantially perpendicularly oriented in relation to the surface. The (measurable) average height of the pillars is 5 µm with a standard deviation of 0.9 µm. Such a stacking seems to lead to an anisotropic nature of the crystal lattice, which could impart beneficial properties such as low activation barrier for lithium ion migration along specific directions and consequently high ionic conductivity on the material.

Fig. 11A shows lithium dendrite formation in the reference battery cell (no protective layer) for test durations of 175 hours and more, whereas the battery cell of the invention does not show any dendrite formation after 54 days (1300 hours) of testing (Fig. 11B). Such lithium dendrites eventually lead to short circuiting of the cell. It is clear from Fig. 9A that the absolute overpotential values are higher and that the overpotential signal is less stable for the reference battery cell compared to the battery cell of the invention. Peak values are visible and become more frequent for test durations longer than 350 hours, indicating inhomogeneous plating/stripping of lithium due to the formation of heterogeneous surface film whose resistance increases over time. This is in agreement with the increasing surface film resistance as measured by impedance spectroscopy and discussed in Example 4 the results of which are shown in Fig. 7A and Fig. 7B. The protective layer thus provides clear protection against lithium dendrite formation by enabling a smooth and stable surface film with minimal increase in resistance.

## Claims

1. A method for applying a protective layer (22) on at least part of an exposed surface (23) of a substrate (21), the method comprising the steps of:
(i) activating a gas by means of an atmospheric pressure plasma discharge to obtain an activated gas, wherein the gas comprises nitrogen (N₂), and
(ii) contacting the exposed surface (23) with the activated gas to form the protective layer on at least part of the exposed surface,
wherein the surface comprises a metallic element and/or an alloy of the metallic element, wherein the metallic element is an alkali metal or an alkaline earth metal, and wherein the protective layer comprises a nitride of the metallic element,
**characterised in that** contacting the exposed surface comprises contacting the exposed surface (23) with the activated gas in an afterglow resulting from the atmospheric pressure plasma discharge.

2. The method of claim 1, wherein the gas comprises N₂ in an amount of at least 90 vol.%, preferably at least 95 vol.%, more preferably at least 98 vol.%, most preferably at least 99 vol.%, in particular at least 99.5 vol. %.

3. The method of claim 1 or 2, wherein a concentration of an oxidizing gas, such as O₂, in the gas is equal to or lower than 0.5 vol.%, preferably equal to or lower than 0.05 vol.%, more preferably equal to or lower than 0.005 vol.%.

4. The method of any one of the previous claims, wherein the metallic element is sodium (Na), lithium (Li) or magnesium (Mg) and the nitride is sodium nitride (Na₃N), lithium nitride (Li₃N) or magnesium nitride (Mg₃N₂), respectively.

5. The method of any one of the preceding claims, wherein the exposed surface is kept remote from the atmospheric pressure plasma discharge.

6. The method of any one of the previous claims, wherein the exposed surface is contacted with the activated gas at a temperature equal to or lower than 700°C, preferably equal to or lower than 180°C, more preferably equal to or lower than 120°C, most preferably equal to or lower than 100°C, in particular equal to or lower than 75°C.

7. The method of any one of the previous claims, wherein contacting the exposed surface with the activated gas comprises alternating time periods wherein the exposed surface is contacted with the activated gas comprising a higher concentration of reactive species and time periods wherein the exposed surface is contacted with the activated gas comprising a lower concentration of the reactive species.

8. An article (20) obtainable by the method of any one of the claims 1 to 7, the article comprising a substrate (21) and a protective layer (22) covering at least part of the substrate (21), wherein the protective layer (22) and the substrate (21) share an interface (23), wherein the interface (23) comprises a metallic element and/or an alloy of the metallic element, wherein the metallic element is an alkali metal or an alkaline earth metal, **characterised in that** the protective layer (22) comprises a plurality of spaced apart pillars (30) projecting from the interface (23), wherein the pillars (30) are made of stacked layers of crystals of a nitride of the metallic element, and wherein the stacked layers of crystals comprise substantially a polyhedron shape.

9. The article of claim 8, wherein the plurality of pillars each comprise a tip end, wherein the tip end forms a vertex or an edge of the polyhedron shape.

10. The article of claim 8 or 9, wherein the metallic element is lithium and the stacked layers of Li₃N crystals comprise substantially hexagonal bipyramid structures.

11. The article of any one of claims 8 to 10, wherein the pillars have a free height between 10 nm and 100 µm, preferably between 50 nm and 50 µm, more preferably between 250 nm and 25 µm, most preferably between 500 nm and 15 µm, in particular between 1 µm and 15 µm.

12. The article of any one of claims 8 to 11, wherein the protective layer is made substantially of α-phase of the nitride of the metallic element and preferably is substantially free from β-phase of the nitride.

13. The article of claim 12, wherein the α-phase of the nitride is maintained upon repeated plating/stripping cycles of the article, in particular at least for 250 cycles at a current density of 1 mA/cm², preferably at least for 500 cycles, more preferably at least for 600 cycles, most preferably at least for 700 cycles.

14. The article of any one of claims 8 to 13, wherein the protective layer (22) comprises at least 60 mol%, preferably at least 70 mol%, more preferably at least 80 mol%, and most preferably at least 90 mol% of the nitride of the metallic element.

15. An electrode (41, 61, 62), preferably an anode, comprising the article (20) of any one of claims 8 to 14.

16. A battery cell (40) comprising the electrode (41) of claim 15 as an anode.
